# FASCICULE DE BREVET EUROPEEN

(11) **EP 2 865 955 B1**
(45) Date de publication et mention de la délivrance du brevet: **05.08.2020**
(21) Numéro de dépôt: 14190342.7
(22) Date de dépôt: 24.10.2014
(51) Int. Cl.: F24F 3/044, F24F 11/00

(54) **Dispositif de contrôle d'une centrale de traitement d'air dans une piscine**
Kontrollvorrichtung einer Luftaufbereitungszentrale in einem Schwimmbad
Device for controlling an air-treatment plant in a swimming pool

(30) Priorité: 25.10.2013 FR 1360459
(43) Date de publication de la demande: 29.04.2015
(73) Titulaire: Cylergie, 92800 Puteaux (FR)
(72) Inventeur: Archenault, Martial Marceau Bernard, 69009 Lyon (FR); Korytowski, Franck, 71570 La Chapelle de Guinchay (FR); Tardy, Christophe, 69100 Villeurbranne (FR)
(74) Mandataire: Cabinet Beau de Loménie

(56) Documents cités:
- EP-A2- 1 336 803
- FR-A1- 2 915 558
- US-A1- 2003 029 925
- US-A1- 2011 264 274

## Description

L'invention s'inscrit dans le domaine du traitement de l'air d'un local constitué par une piscine couverte et nécessitant un assainissement régulier de l'air, et plus précisément de la commande d'une centrale de traitement d'air mise en place pour un tel local.

Le local est un hall dont l'air intérieur est largement, si ce n'est totalement, séparé de l'air extérieur par les parois, les vitres et le toit du bâtiment, et qui, du fait d'une activité présente en son sein générant une pollution, nécessite que cet air intérieur, (ou ambiant) soit renouvelé régulièrement. Il s'agit d'un local humide dans lequel l'air se charge d'humidité, de dioxyde de carbone exhalé par les baigneurs et de composés chlorés issus de l'eau.

Une centrale de traitement d'air, qui est un dispositif connu, assure dans une telle situation une extraction d'air active hors du hall, et un apport d'air dit air soufflé, constitué d'un mélange d'air extrait et d'air neuf, ce dernier étant prélevé à l'extérieur du bâtiment, ce mélange étant généralement filtré et éventuellement chauffé. L'air extrait réutilisé est appelé air repris ou air recyclé.

Les débits d'air extrait et soufflé, qui sont déterminés par des ventilateurs d'extraction et de soufflage, sont en général constants, si ce n'est qu'ils peuvent être asservis marginalement pour compenser la perte de charge des filtres présents dans les conduits. En dehors de cela, ces débits sont également diminués hors des horaires d'utilisation du local.

Dans le cas des piscines, il est de plus connu de commander la proportion de mélange d'air repris et d'air neuf pour obtenir ponctuellement un rafraîchissement de l'air ambiant par l'air extérieur (commande de rafraîchissement forcé ou « free cooling »). Mais la principale commande de la proportion de mélange d'air est effectuée en fonction de l'humidité de l'air ambiant du hall, qui est suivie par des capteurs fonctionnant en permanence, et qui doit être maintenue sous une valeur de consigne. Cette valeur de consigne est déterminée pour garantir le confort des usagers et éviter la condensation, qui est souvent susceptible d'induire des problèmes de salubrité. Or il est difficile d'anticiper correctement les variations, souvent de grande amplitude, de l'humidité de l'air ambiant en réaction aux commandes de proportion de mélange d'air de la centrale et aux variations des conditions extérieures (ensoleillement, humidité...). Les concepteurs et les exploitants s'imposent par conséquent, selon une logique conservatrice, une marge de sécurité importante vis-à-vis de la valeur de consigne d'humidité qu'ils pourraient choisir, en théorie, sans impacter le confort des usagers et risquer la formation de condensation.

Cela a un coût énergétique, puisque pour confiner le taux d'humidité à des valeurs inutilement faibles on fixe les débits d'air extrait et soufflé à des valeurs inutilement élevées.

On précise de plus que dans les systèmes actuels, la valeur de consigne d'humidité est également déterminée pour, indirectement, garantir une évacuation suffisante des produits chlorés et du dioxyde de carbone. Evidemment, cela implique un choix de la valeur de consigne non optimisé, très approximé, qui, pour que ces produits soient évacués, implique de prendre une marge de sécurité importante, en l'absence d'un suivi des concentrations courantes dans le local. La dépense énergétique induite est très importante, puisque les débits d'air extrait et d'air soufflé sont fixés à des valeurs élevées.

Le document US 2011/264274 décrit un dispositif de contrôle d'une centrale de traitement d'air connu.

Par ailleurs, le document FR 2 915 558 A1 divulgue un dispositif et une méthode conformes aux préambules des revendications indépendantes 1 et 13 ci-dessous.

### Définition de l'invention et avantages associées

L'invention se rapporte à un dispositif de contrôle d'une centrale de traitement d'air pour local constitué par une piscine couverte et nécessitant un assainissement régulier de l'air, tel que défini en revendication 1. La centrale comprend un ventilateur d'extraction d'air et un ventilateur de soufflage d'air pour créer une circulation d'air extrait du local et prélever de l'air neuf à l'extérieur du local, et un système de mélange variable entre air neuf et air extrait pour le soufflage d'air dans le local, le dispositif de contrôle étant configuré pour faire varier les proportions de mélange en air neuf et air extrait en fonction d'un suivi de l'air du local, le dispositif de contrôle étant de plus configuré pour commander la vitesse des ventilateurs en fonction d'un suivi de l'air du local, et pour commander les vitesses de chacun des ventilateurs en fonction du rapport entre les vitesses de ces deux ventilateurs.

Grâce à cette solution, il est obtenu un système plus économe en énergie que les systèmes selon les principes de l'art antérieur, car le degré de liberté obtenu par l'introduction d'une commande de la vitesse d'air permet une commande plus optimale, qui permet de prendre une plus faible marge de sécurité par rapport aux consignes choisies pour la qualité de l'air.

Dans un mode de réalisation particulier, pour assainir l'air du local, l'augmentation de la proportion de mélange en air neuf est privilégiée, au moins dans une certaine gamme de valeurs de commande, par rapport à l'augmentation de la vitesse du ventilateur.

Grâce à cette caractéristique, il est rendu possible de diminuer la vitesse d'air commandée, et donc d'économiser en consommation électrique du ventilateur concerné. Par ailleurs, la diminution de la vitesse d'air augmente l'efficacité des échangeurs de chaleur et des récupérateurs de chaleur éventuellement installés sur les conduits d'extraction et de soufflage d'air. Cette augmentation d'efficacité permet un gain d'énergie supplémentaire pour l'ensemble du bâtiment et du système de traitement d'air.

Dans un mode de réalisation particulier, le dispositif est configuré pour commander les volets d'air en partant d'une valeur minimale d'air neuf. Cette valeur peut être de 10% en air neuf, selon le niveau d'évaporation des bassins.

Mais surtout, dans un mode de réalisation particulier, le dispositif est configuré pour commander la circulation d'air en augmentant la vitesse du ventilateur quand la proportion en air neuf commandée atteint une valeur prédéterminée. Cette valeur peut être de 100%.

Dans un mode de réalisation particulier, le dispositif est configuré pour abaisser la vitesse du ventilateur à une valeur prédéterminée, quand la proportion en air neuf est commandée à une valeur inférieure à une valeur prédéterminée. La valeur prédéterminée de vitesse d'air peut correspondre à une fréquence de commande de 22 Hz.

Dans un mode de réalisation particulier, le dispositif de contrôle est également configuré pour commander le traitement d'air en tenant compte d'une estimation d'un risque de condensation sur au moins un emplacement sensible du local.

Dans un mode particulier de réalisation l'estimation du risque de condensation est réalisée sur la base des mesures effectuées par des capteurs de risque de condensation placés sur ce ou ces emplacements sensibles.

Les emplacements sensibles sont en particulier les vitres ou les parois vitrées exposées aux déperditions par radiations lumineuses du local sur lesquelles apparaît en priorité la condensation.

En estimant le risque de condensation sur les emplacements où apparaît en priorité la condensation, l'invention permet au dispositif de contrôle de déclencher plus rapidement les mesures de régulation de la circulation d'air pour éviter la formation de condensation.

Les capteurs de risque de condensation peuvent en particulier être des capteurs de condensation (par exemple par capacité) fournissant une mesure réelle de condensation.

Lorsque les capteurs de risque de condensation sont installés sur une vitre (ou sur une paroi vitrée), le risque d'apparition de condensation peut aussi s'appréhender par mesure optique d'une réfraction de la vitre ou par mesure de conductivité entre deux électrodes adhérentes à la vitre.

Dans un mode particulier de réalisation de l'invention, l'estimation du risque de condensation au niveau d'un emplacement sensible du local est réalisée en prenant en compte au moins trois paramètres que sont la température de cet emplacement sensible, la température et le taux d'humidité de l'air ambiant ou préférentiellement de l'air extrait. Dans ce dernier cas, les mesures de température et de taux d'humidité peuvent être effectuées dans le conduit d'extraction d'air ou à proximité du ou des ventilateurs d'extraction.

Dans un autre mode particulier de réalisation de l'invention, l'estimation de ce risque de condensation prend en outre en compte une mesure du taux d'humidité de l'air à proximité (par exemple à moins d'un mètre) de l'emplacement où a été mesuré la température de l'emplacement sensible. Dans un autre mode de réalisation, l'estimation d'un risque de condensation au niveau d'un emplacement sensible est réalisée à partir de la différence entre une mesure de température de cet emplacement sensible du local et le point de rosée de l'air.

Il est connu que le point de rosée de l'air peut être calculé sur la base d'une mesure de température et d'une mesure du taux d'humidité relative de l'air.

De façon avantageuse, on calcule le point de rosée sur une zone précise du local contenant la piscine et non pas de façon globale pour l'ensemble du local à partir de la mesure de la température de l'air ambiant ou extrait, cette dernière pouvant en pratique différer de plus de cinq degrés de la température locale mesurée dans certaines zones du local.

Dans un mode de réalisation particulier, le dispositif de contrôle est également configuré pour commander le traitement d'air en tenant compte d'une valeur extraite de l'analyse de l'eau du bassin en équilibre avec l'air du local, utilisée pour suivre la concentration en chloramines dans l'air du local ou selon une mesure directe de chloramines dans l'air du local ou l'air repris.

Par « eau du bassin en équilibre avec l'air du local ventilé » on entend, comme de façon connue, que les phases liquide et vapeur des différents composées chimiques de l'eau et de l'air sont en équilibre.

Dans un mode de réalisation particulier, la valeur extraite de l'analyse de l'eau du bassin en équilibre avec l'air du local est la valeur de concentration en chlore combinée dans l'eau de la piscine.

Il a été constaté expérimentalement que l'acide hypochloreux utilisé comme désinfectant dans les piscines réagit avec les produits azotés résultant de la décomposition des produits biologiques de pollution dissous dans l'eau pour produire des monochloramines, des dichloramines puis des trichloramines. Les trichloramines ont une tension de vapeur très basse, de sorte qu'ils sont très volatiles et pratiquement impossibles à mesurer dans l'eau. Ils s'évaporent rapidement dans l'air du local. La présence de dichloramines et d'acide hypochloreux dans l'eau entraine donc la formation de trichloramine dans l'air. L'évaporation de ces trichloramines dans l'air tire les réactions chimiques vers une consommation de dichloramines. Ainsi, la mesure de monochrolamines et de dichloramines dans l'eau (dite mesure de chlore combiné) permet de mesurer le passage de trichloramines dans l'air. Une concentration élevée de chlore libre (par exemple supérieure à 1,5 mg/l) dans l'eau et de chlore combiné (par exemple de l'ordre de 0,5 mg/l) indique la formation de trichloramines dans l'air.

La demanderesse a donc constaté qu'il existe ainsi une relation entre le taux de chlore combiné, sa décroissance dans le temps et le taux de polluants chlorés (chloramine) dans l'air.

On précise en outre que la mesure de chlore combiné dans l'eau peut être effectuée par la différence du chlore total et du chlore libre.

Dans un mode de réalisation particulier de l'invention, le dispositif de contrôle est également configuré pour commander le traitement d'air en tenant compte d'un taux d'occupation de la piscine.

Au sens de l'invention, le taux d'occupation de la piscine correspond à une estimation du nombre d'usagers de la piscine présents dans le hall de la piscine ou dans la piscine elle-même.

Le taux d'occupation de la piscine peut être mesuré par le système contrôlant les entrées et les sorties des utilisateurs de la piscine.

En variante, le taux d'occupation de la piscine peut être mesuré en comptant le nombre de téléphones portables détectés dans les vestiaires de la piscine, la détection des téléphones portables s'effectuant par analyse des signaux radio émis ou reçus par ces téléphones.

Dans un mode de réalisation particulier, le dispositif de contrôle est également configuré pour commander le traitement d'air en tenant compte d'une mesure de concentration en dioxyde de carbone dans l'air du local ou l'air extrait.

La mesure du taux de dioxyde de carbone dans l'air du local ou dans l'air extrait permet de mesurer de façon indirecte le taux d'occupation du local. La commande du traitement d'air par le dispositif de contrôle selon une mesure du taux de dioxyde de carbone permet également de suivre et de réguler la concentration en chloramines dans l'air du local.

En effet, le taux d'émission de CO2 par un baigneur en activité sportive est en moyenne de 40 litres par heure. A ce régime, il faut un taux d'apport d'air neuf de 60 m3 par heure pour maintenir un taux de CO2 de 850 ppm.

Donc, en choisissant comme valeur de consigne un taux de CO2 de 850 ppm dans l'air repris, le dispositif de contrôle impose un régime d'apport d'air neuf de 60 m3 par heure. Ce régime d'apport d'air neuf correspond au taux d'air neuf préconisé par les organismes sanitaires (en France l'ANSES) pour réguler la présence de chloramines dans l'air d'un local contenant une piscine. La mesure du taux de CO2 est ainsi un indicateur du régime d'apport d'air neuf nécessaire à la régulation des chloramines dans l'air.

Pour ces différents aspects, l'avantage réside dans le fait de pouvoir surveiller en connaissance de cause les valeurs des polluants, et de procéder à l'asservissement sans faire d'hypothèses conservatrices nécessairement coûteuses en énergie.

Dans un mode de réalisation particulier, le système comprend des moyens de communication par ondes radio pour obtenir des valeurs de mesure en provenance de capteurs répartis dans le local.

Dans un mode de réalisation particulier, le système comprend des moyens de communication par réseau de communication, pour son contrôle par un opérateur ou un système de contrôle distant.

Selon l'invention, le dispositif étant adapté à commander une centrale comprenant un ventilateur d'extraction d'air et un ventilateur de soufflage d'air, le dispositif est en outre configuré pour commander les vitesses de chacun des deux ventilateurs en fonction du rapport entre les vitesses de ces deux ventilateurs.

Dans un mode de réalisation particulier, le rapport entre les vitesses des deux ventilateurs est établi en fonction d'une différence de pression enregistrée entre extérieur et intérieur du local.

Dans un autre mode de réalisation particulier, le dispositif commande les vitesses de chacun des deux ventilateurs, et effectue un ajustement du rapport entre les vitesses des deux ventilateurs selon les vitesses d'air mesurées dans les gaines de soufflage et d'extraction.

Les vitesses d'air dans les gaines sont mesurées par exemple par des capteurs insérés dans les gaines.

Dans un autre mode de réalisation, le dispositif commande les vitesses de chacun des deux ventilateurs, et effectue un ajustement du rapport entre les vitesses des deux ventilateurs selon une mesure de vitesse d'air effectuée par un capteur de vitesse d'air placé sur un point de courant d'air créé par la surpression ou la dépression du local.

De façon judicieuse, le capteur de vitesse d'air est placé par exemple dans le sas séparant les vestiaires du local contenant la piscine.

Le dispositif peut constituer un dispositif de mise à niveau pour automate d'asservissement préexistant et comprendre des moyens d'interfaçage avec un tel automate préexistant de la centrale de traitement d'air, pour échanger avec ledit automate préexistant des valeurs de mesure obtenues par l'automate préexistant et des commandes générées par le dispositif de mise à niveau.

Le dispositif de mise à niveau comprend de plus au moins un variateur électronique de fréquence pour commander ledit ventilateur ou les ventilateurs.

L'invention propose aussi une méthode de contrôle d'une centrale de traitement d'air pour local constitué par une piscine couverte, définie en revendication 13. En particulier, cette méthode met en œuvre une étape de variation des proportions de mélange en air neuf et air extrait en fonction d'un suivi de l'air du local, la méthode de contrôle comprenant de plus une étape de commande de la vitesse des ventilateurs en fonction d'un suivi de l'air du local, ainsi qu'une étape de commande des vitesses du ventilateur d'extraction d'air et du ventilateur de soufflage d'air en fonction du rapport entre les vitesses de ces deux ventilateurs.

L'invention va être présentée maintenant en relation avec les figures annexées.

### Liste des figures

La figure 1 est un schéma d'un asservissement d'une centrale de traitement d'air selon l'art antérieur.
La figure 2 est un schéma d'un asservissement d'une centrale de traitement d'air selon l'invention.
La figure 3 est une vue des éléments d'un dispositif selon l'invention.
La figure 4 est un schéma des étapes mises en œuvre dans le cadre d'un mode de réalisation particulier de l'invention.
La figure 5 présente l'évolution au cours du temps de paramètres du local constitué d'une piscine couverte et de la centrale de traitement d'air, sans la mise en œuvre de l'invention, puis avec mise en œuvre de l'invention.

### Description détaillée

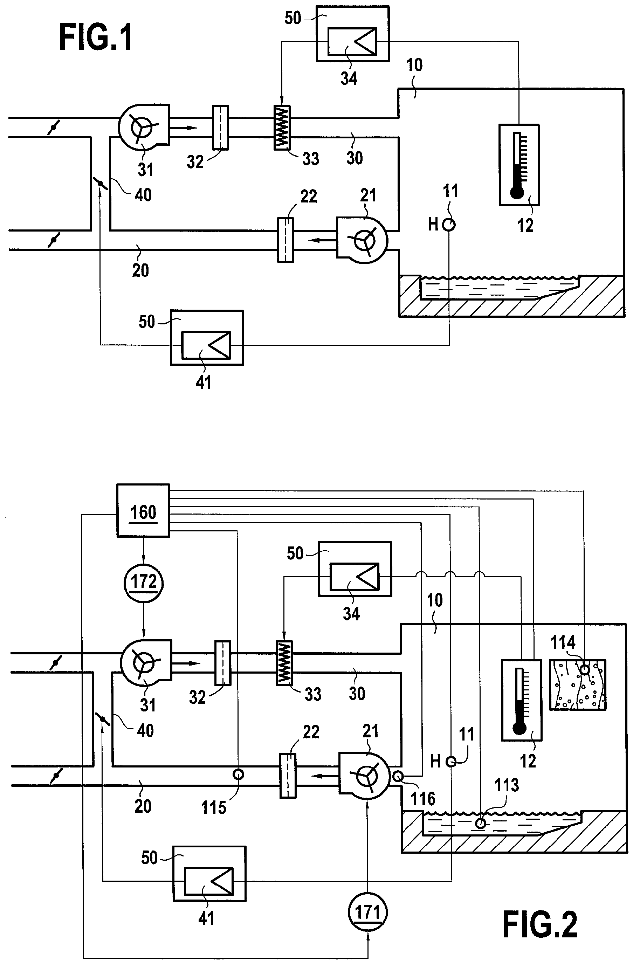

En **figure 1****,** on a représenté un asservissement d'une centrale de traitement d'air pour un local constitué d'une piscine couverte 10, dans lequel sont installés des unités de mesure de l'humidité et de la température 11 et 12 respectivement. Un conduit d'air 20 sur lequel est installé un ventilateur d'extraction 21 est utilisé pour extraire de l'air ambiant du local 10. Le conduit 20 s'achève à sa deuxième extrémité par une embouchure donnant sur l'extérieur. Un conduit d'air 30 sur lequel est installé un deuxième ventilateur 22, dit ventilateur de soufflage, est utilisé pour souffler de l'air dans le local 10. Ce conduit 30 prélève de l'air dans l'atmosphère extérieure.

Sur chacun des deux conduits, des filtres 22 et 32 sont placés après les ventilateurs correspondants dans le sens de l'air. Sur le conduit 30, après le filtre dans le sens de l'air, une unité de chauffage ou de refroidissement de l'air, appelée batterie 33, permet de chauffer ou de refroidir l'air soufflé. Elle est pilotée en fonction de la température du local 10 mesurée par l'unité de mesure de température 11, à l'aide d'une boucle de réglage 34.

En aval du filtre 22 sur le conduit 20 et en amont du ventilateur 31 sur le conduit 30, un système de mélange d'air 40 est présent. Il permet d'injecter dans le conduit 30, une fraction de l'air circulant dans le conduit 20, cette fraction n'étant pas conséquent pas rejetée sur l'extérieur. La valeur de la fraction est pilotée en fonction de l'humidité mesurée dans le local 10, par l'unité de mesure 11, à l'aide d'une boucle de réglage 41. Le pilotage est effectué à l'aide d'un automate 50 de la centrale de traitement d'air, comprenant les deux boucles de réglage 34 et 41. Les vitesses des ventilateurs d'extraction 21 et de soufflage 22 sont sensiblement constantes, et ne sont en tout cas pas commandées en fonction des conditions régnantes dans le local 10.

En **figure 2****,** on a représenté la mise à niveau de la centrale de traitement d'air de la figure 1, conformément à l'invention. Les éléments déjà représentés en figure 1 sont figurés avec les mêmes numéros de référence.

Le local 10 est muni d'une unité de mesure du taux de chloramines dans l'eau, ici un analyseur de chlore combiné dans l'eau 113.

En variante, le local 10 est muni d'une unité de mesure du taux de chloramines dans l'air. Les mesures des chloramines dans l'air, si elles sont retenues, peuvent être des mesures continues ou discontinues, utilisant par exemple la mesure de conduction de l'eau condensée, ou des mesures spectrophotométriques par réaction sur bandelette de test.

Le local 10 est également muni de capteurs de température 114 plaqués contre les surfaces présentant le plus de risque de condensation, telle les parois vitrées du local 10 et d'un capteur d'hygrométrie 116 situé à l'embouchure du conduit 20.

Les capteurs de température 114 sont équipés d'une sonde de contact en Platine, adhérente à la paroi, qui permet de mesurer la température de contact sur la surface de la paroi.

Le capteur 116 mesure le taux d'humidité de l'air extrait.

Les capteurs 114 plaqués contre les surfaces permettent à l'automate A de mesurer localement le risque d'apparition de condensation sur ces surfaces spécifiques en combinant mesure de la température de contact sur les surface de la paroi et mesure du taux d'humidité relative de l'air repris. L'automate A détecte ainsi un risque de condensation sur un point précis du local.

Les capteurs 114 peuvent être équipés d'émetteurs radio, et être disposés à des endroits difficilement accessibles du local, sans qu'il soit nécessaire de mettre en place une connexion filaire pour récupérer, en temps réel, les valeurs mesurées.

Dans une autre variante, les capteurs 114 et le capteur 116 peuvent être remplacés par des capteurs de condensation réelle (par capacité) positionnés contre les surfaces présentant le plus de risque de condensation.

Un capteur de dioxyde de carbone 115 est aussi installé dans le local 10 ou dans le conduit 20, pour mesurer le taux de dioxyde de carbone dans l'air du local.

Les mesures des capteurs 11, 12, 113, 114, 115 et 116 sont centralisées en temps réel, soit par voix filaire, soit par ondes radio, par un automate 160.

L'automate 160 commande des variateurs de vitesse (variateurs électroniques de fréquence) 171 et 172 actionnant les ventilateurs 21 et 31.

On précise que l'automate 160 est également alimenté, par l'automate préexistant 50, avec les valeurs en temps réel de la température de l'air soufflé après la batterie (unité de chauffage) 33, ainsi que celles de la température et de l'humidité de l'air extérieur et celles de la température et de l'humidité du l'air du local 10.

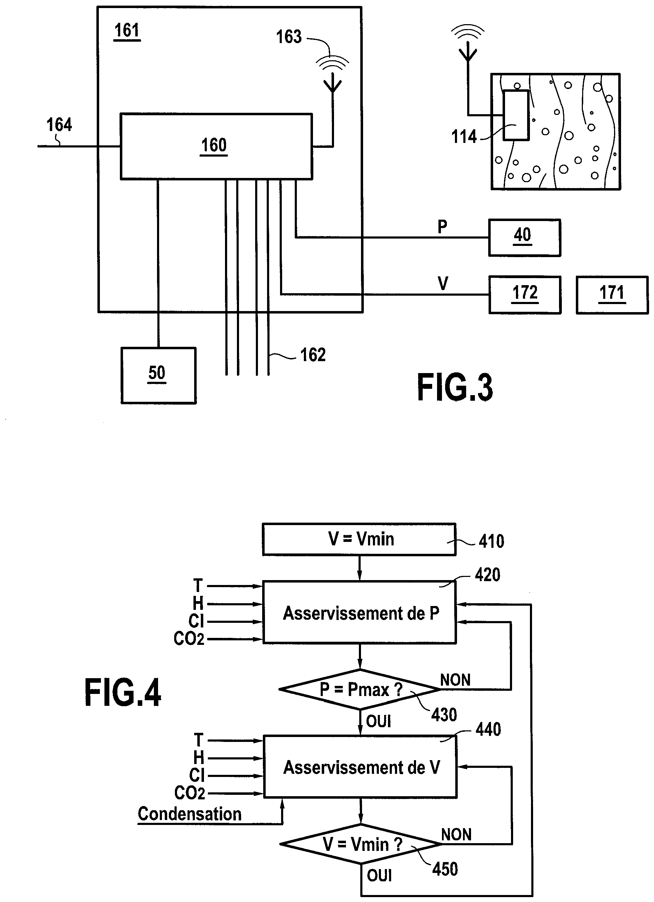

En **figure 3****,** on a présenté le matériel utilisé. L'automate 160 est un automate programmable et autonome, dans une armoire électrique implémentable 161 disposant d'une alimentation et d'une protection électrique. L'automate 160 reçoit des données de mesures numériques, analogiques ou Tout Ou Rien (TOR) des différents capteurs, par voie filaire 162 ou par communication radio 163. Il a une connexion Internet 164, par connexion sans fil ou filaire.

Les capteurs de température 114 sont disposés dans le local, et communiquent par radio avec l'automate, celui-ci disposant d'un modem radio. Les mesures des capteurs 11, 12, 113, 115 et 116 peuvent aussi être transmises à l'automate par ondes radio.

Les variateurs de fréquence 171 et 172 sont commandés directement par l'automate 160. Celui-ci communique également avec l'automate 50 préexistant de la centrale de traitement d'air, auquel il est connectable et adaptable, par un protocole de communication pour automatisme, tel bacnet ou modbus. Les entrées et sorties peuvent aussi être gérées à l'aide de signaux analogiques, par exemple sur la gamme 0-10V et 4-20 mA.

En **figure 4****,** on a représenté le principe de régulation mis en œuvre avec le système des figures 2 et 3.

Au cours d'une étape 410, on démarre le système en fixant la vitesse de soufflage et d'extraction à une valeur minimale V = Vmin, correspondant par exemple à une valeur de fréquence de commande des moteurs des ventilateurs de 22 Hz.

Dans un mode de réalisation particulier, le dispositif est configuré pour commander les volets d'air en partant d'une valeur minimale d'air neuf. Cette valeur peut être de 10% en air neuf, selon le niveau d'évaporation des bassins.

Puis, au cours d'une étape 420, la proportion définissant le mélange air extrait / air neuf P est asservie sur la base des valeurs d'humidité H, de taux de chloramines, et de taux de CO2. Ces valeurs sont obtenues des capteurs présentés en figures 2 et 3. On précise qu'une consigne de taux de chloramines dans l'eau peut être fixée à 0.5 mg/l et une consigne de taux de CO2 peut être fixée à 750 ppm. L'asservissement de l'étape 420 peut incorporer une prise en charge d'une demande de rafraîchissement forcé en prenant en compte la température T du local, la température extérieure, l'humidité extérieure et l'humidité du local. Le réglage, pour tous les éléments de l'asservissement, se fait en mode proportionnel intégral (PI) ou proportionnel intégral dérivé (PID) sur de larges bandes proportionnelles.

L'ouverture des volets d'air se fait sur la commande du régulateur PI ou PID la plus élevé.

Au cours d'une étape 430, suivant la fixation de la valeur de P, on détermine si la valeur de P est égale ou proche d'une valeur Pmax, qui peut être 100%, au sens où, pour une valeur P = Pmax %, l'air soufflé est de l'air extérieur à Pmax %, avec une incorporation d'air extrait à 100-Pmax %. Si ce n'est pas le cas, la valeur de P est à nouveau asservie, par retour à l'étape 420. Par contre, si l'air soufflé est de l'air extérieur à Pmax %, le système est orienté vers une étape 440 d'asservissement de la valeur de vitesse V.

Au cours d'une étape 440, la vitesse des ventilateurs de soufflage et d'extraction est asservie en fonction de la température T, de l'humidité H, du taux de chloramines, et du taux de CO2. Ces valeurs sont toujours obtenues des capteurs présentés en figures 2 et 3. On précise que la valeur de consigne utilisée pour l'humidité est choisie légèrement supérieure à celle utilisée lors de l'étape 420, et que la valeur de consigne pour le taux de CO2 peut aussi être plus élevée que celle utilisée pour l'étape 420, par exemple à une valeur de 1000 ppm. La valeur de consigne du taux de chloramines peut être par contre similaire ou identique à celle utilisée à l'étape 420. Mais surtout cet asservissement comprend un contrôle des risques de condensation. L'automate A, à partir des mesures de température des capteurs 114 et de la mesure du taux d'humidité de l'air extrait par le capteur 116, calcule un point de rosée et régule la différence entre le point de rosée calculée et la température mesurée par les capteurs 114. On utilise pour cet aspect une bande proportionnelle étroite sur deux degrés de point de rosée. L'asservissement de l'étape 440 incorpore de plus un asservissement de respect de la consigne de température minimale dans le local. Il peut incorporer une prise en charge d'une demande de rafraîchissement forcé. Le réglage, pour tous les éléments de l'asservissement, se fait en mode proportionnel intégral ou proportionnel intégral dérivé (PID) sur des bandes proportionnelles étroites avec de faibles constantes de temps.

La commande de la vitesse des ventilateurs de soufflage et d'extraction se fait sur la commande du régulateur PI ou PID la plus élevé.

On précise que même si dans la présentation qui vient d'être faite la vitesse V désigne à la fois la vitesse de soufflage et la vitesse d'extraction, il est proposé, dans un mode particulier de l'invention, de faire varier séparément ces deux vitesses autour de la vitesse V déterminée au cours de l'étape 440, en fonction par exemple d'une différence de pression enregistrée entre l'intérieur du local et l'extérieur du local, pour éviter la mise en dépression de celui-ci, ce qui aurait un coup énergétique.

De plus, pendant les étapes 420 et 440, une régulation classique à la hausse ou à la baisse, de la température de l'air soufflé est effectuée conformément à ce qui a été évoqué en lien avec la figure 1. Et l'asservissement de l'étape 440 prend en compte la température de l'air de soufflage, et augmente la vitesse de soufflage pour limiter l'envoi d'air chaud dépassant les plages de confort par les batteries d'eau chaude (unité de chauffage de l'air) avec une vitesse V trop faible.

A l'issu de l'étape 440, en fonction de la valeur de V, on reprend l'asservissement de la proportion P du mélange à l'étape 420, si V est égal à ou proche de Vmin, ou, sinon, on continue l'asservissement de V à l'étape 420.

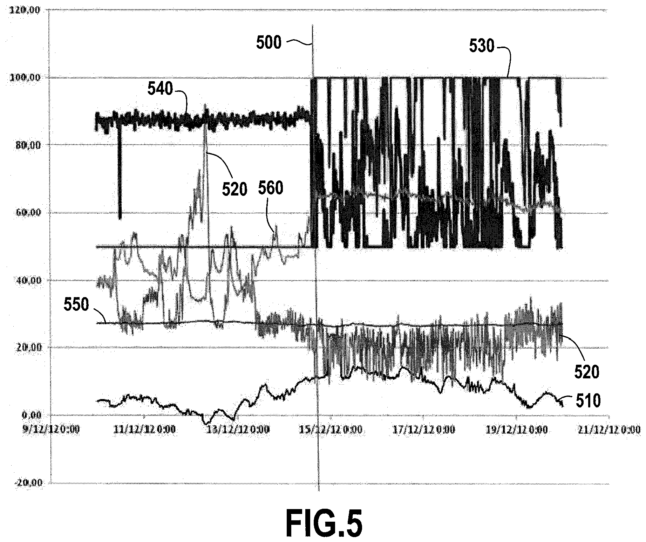

A la **figure 5****,** on a représenté divers paramètres suivis pour une piscine dont la centrale de traitement est contrôlée selon les principes de l'invention. L'axe des abscisses est un axe temporel sur une dizaine de jours, et sur lequel la marque 500 indique le passage d'une régulation sans les principes de l'invention, similaire à celle présentée en figure 1, à une régulation conforme aux principes de l'invention. La température extérieure est figurée par la courbe 510.

Les éléments commandés comprennent tout d'abord le chauffage de l'air de soufflage dans l'unité de chauffage 33 (figures 1 et 2). Il apparaît ici sous la forme de la courbe 520, qui présente de fortes variations dans le régime de la régulation sans les principes de l'invention, puis de beaucoup plus faibles variations une fois l'invention mise en œuvre.

Parmi les éléments commandés, on trouve ensuite la proportion d'air neuf dans le mélange, apparaissant ici sur la courbe 530, et qui sur l'exemple présenté, est constante dans le régime de la régulation sans les principes de l'invention, à une valeur Pmin, puis elle devient fortement variable dès que les principes de l'invention sont mis en œuvre. La valeur reste toujours au moins égale à la valeur Pmin, avec des passages fréquents à la valeur de 100% d'air neuf.

Toujours parmi les éléments commandés, on trouve enfin la vitesse des ventilateurs, figurée par la courbe 540. Dans le régime de la régulation sans les principes de l'invention, cette valeur est sensiblement constante, à une valeur élevée. Dès que l'invention est mise en œuvre la valeur diminue sensiblement, et s'établit, à chaque fois que les la valeur de proportion d'air neuf n'est pas à 100%, à une valeur Vmin.

La figure présente le résultat de la régulation en matière de température de l'air du hall sur la courbe 550. On constate que la température est très constante au cours du temps, ce qui montre que les deux régulations sont en mesure de maintenir cette température à la valeur de consigne, et obtiennent des résultats similaires.

La figure présente aussi le résultat de la régulation en matière d'humidité de l'air du hall sur la courbe 560. On constate que tant que la régulation antérieure est utilisée, l'humidité est assez fluctuante, dans une gamme de valeurs assez basses. Par contre, dès que la régulation nouvelle est mise en œuvre, la valeur d'humidité se stabilise à une valeur plus haute, juste inférieure à la valeur de consigne. On voit bien sur ce point la plus grande efficacité de l'invention puisqu'il n'est plus nécessaire de prendre une marge importante vis-à-vis de la consigne optimale pour garantir que celle-ci n'est pas dépassée, puisque la valeur d'humidité est beaucoup mieux maîtrisée et ne fluctue que très peu au cours du temps.

La grande efficacité de l'invention se manifeste aussi à travers l'économie d'énergie obtenue par la moindre sollicitation du chauffage (batterie) 33, visible à la courbe 520.

On précise que, selon différents modes de réalisation, l'automate 160 peut commander lui-même la vanne de régulation de la boucle d'eau chaude ou d'eau froide de la batterie 33 ou des batteries 33, et également contrôler le fonctionnement du récupérateur de chaleur éventuellement présent sur le conduit 20. Alternativement ces contrôles sont effectués par l'automate préexistant.

Dans une variante de l'invention, on suit les concentrations en carbone organique volatil (COV) ou les taux de particules dans l'air du local 10 pour effectuer l'asservissement, en plus ou à la place des autres valeurs suivies.

L'invention n'est pas limitée aux modes de réalisation présentés, mais s'étend à toutes les variantes dans le cadre de la portée des revendications.

## Revendications

1. Dispositif de contrôle (160) d'une centrale de traitement d'air pour local (10) constitué par une piscine couverte et nécessitant un assainissement régulier de l'air, la centrale comprenant un ventilateur d'extraction d'air (21) et un ventilateur de soufflage d'air (31) pour créer une circulation d'air extrait du local et prélever de l'air neuf à l'extérieur du local, et un système (40) de mélange variable entre air neuf et air extrait pour le soufflage d'air dans le local, le dispositif de contrôle étant configuré pour faire varier les proportions (P) de mélange en air neuf et air extrait en fonction d'un suivi (11, 12, 113, 114, 115, 162, 163) de l'air du local, le dispositif de contrôle étant de plus configuré pour commander la vitesse (V) des ventilateurs en fonction d'un suivi (11, 12, 113, 114, 115, 162, 163) de l'air du local (10), **caractérisé en ce que** le dispositif est en outre configuré pour commander les vitesses (V) de chacun des deux ventilateurs (21, 31) en fonction du rapport entre les vitesses de ces deux ventilateurs (21, 31).

2. Dispositif de contrôle selon la revendication 1, dans lequel, pour assainir l'air du local, l'augmentation de la proportion (P) de mélange en air neuf est privilégiée, au moins dans une certaine gamme de valeurs de commande (Vmin, Pmax), par rapport à l'augmentation de la vitesse (V) desdits ventilateurs.

3. Dispositif de contrôle selon la revendication 1 ou la revendication 2, dans lequel le dispositif est configuré pour commander la circulation d'air en augmentant la vitesse (V) desdits ventilateurs quand la proportion (P) en air neuf commandée atteint une valeur prédéterminée (Pmax).

4. Dispositif de contrôle selon l'une des revendications 1 à 3, dans lequel le dispositif est configuré pour abaisser la vitesse desdits ventilateurs à une valeur prédéterminée (Vmin), quand la proportion en air neuf est commandée à une valeur inférieure à une valeur prédéterminée (Pmax).

5. Dispositif de contrôle selon l'une des revendications 1 à 4, dans lequel le dispositif de contrôle est également configuré pour commander le traitement d'air en tenant compte d'une estimation d'un risque de condensation (114) à des emplacements sensibles du local.

6. Dispositif de contrôle selon l'une des revendications 1 à 5, dans lequel le dispositif de contrôle est également configuré pour commander le traitement d'air en tenant compte d'une valeur de concentration (113) en chlore combiné dans l'eau de la piscine du local, utilisée pour suivre la concentration en chloramines dans l'air du local, ou selon une mesure directe de chloramines dans l'air du local ou l'air repris.

7. Dispositif de contrôle selon l'une des revendications 1 à 6, dans lequel le dispositif de contrôle est également configuré pour commander le traitement d'air en tenant compte d'une mesure de concentration (115) en dioxyde de carbone dans l'air du local ou l'air extrait.

8. Dispositif de contrôle selon l'une des revendications 1 à 7, comprenant des moyens de communication par ondes radio (163) pour obtenir des valeurs de mesure en provenance de capteurs répartis dans le local.

9. Dispositif de contrôle selon l'une des revendications 1 à 8, comprenant des moyens de communication (164) par réseau de communication, pour son contrôle par un opérateur ou un système de contrôle distant.

10. Dispositif de contrôle selon la revendication 1 dans lequel ledit rapport est établi en fonction d'une différence de pression enregistrée entre extérieur et intérieur du local.

11. Dispositif de contrôle selon l'une des revendications 1 à 10, qui constitue un dispositif de mise à niveau pour automate d'asservissement préexistant (50) et qui comprend des moyens d'interfaçage avec un tel automate préexistant de la centrale de traitement d'air, pour échanger avec ledit automate préexistant des valeurs de mesure obtenues par l'automate préexistant et des commandes générées par le dispositif de mise à niveau.

12. Dispositif de mise à niveau selon la revendication 11, comprenant de plus au moins un variateur de fréquence (171, 172) pour commander ledit ventilateur.

13. Méthode de contrôle (160) d'une centrale de traitement d'air pour local (10) constitué par une piscine couverte et nécessitant un assainissement régulier de l'air, la centrale comprenant un ventilateur d'extraction d'air (21) et un ventilateur de soufflage d'air (31) pour créer une circulation d'air extrait du local et prélever de l'air neuf à l'extérieur du local, et un système (40) de mélange variable entre air neuf et air extrait pour le soufflage d'air dans le local, la méthode de contrôle comprenant une étape de variation des proportions (P) de mélange en air neuf et air extrait en fonction d'un suivi (11, 12, 113, 114, 115, 162, 163) de l'air du local, la méthode de contrôle comprenant de plus une étape de commande de la vitesse (V) des ventilateurs en fonction d'un suivi (11, 12, 113, 114, 115, 162, 163) de l'air du local (10), la méthode étant **caractérisée en ce qu'**elle comprend en outre une étape de commande des vitesses (V) de chacun des deux ventilateurs (21, 31) en fonction du rapport entre les vitesses de ces deux ventilateurs (21, 31).

## Patentansprüche

1. Steuervorrichtung (160) für eine Luftaufbereitungszentrale für eine Lokalität (10), die aus einem überdachten Schwimmbecken besteht und eine regelmäßige Reinigung der Luft benötigt, wobei die Zentrale einen Luftabzugsventilator (21) und einen Lufteinblasventilator (31) umfasst, um eine Zirkulation von aus der Lokalität abgezogener Luft zu erzeugen und Frischluft von außerhalb der Lokalität anzusaugen, und ein System (40) zur variablen Mischung von Frischluft und abgezogener Luft zum Einblasen von Luft in die Lokalität, wobei die Steuervorrichtung dazu ausgestaltet ist, die Mischungsanteile (P) von Frischluft und abgezogener Luft in Abhängigkeit von einer Überwachung (11, 12, 113, 114, 115, 162, 163) der Luft in der Lokalität zu variieren, wobei die Steuervorrichtung ferner dazu ausgestaltet ist, die Drehzahl (V) der Ventilatoren in Abhängigkeit von einer Überwachung (11, 12, 113, 114, 115, 162, 163) der Luft in der Lokalität (10) zu regeln, **dadurch gekennzeichnet, dass** die Vorrichtung ferner dazu ausgestaltet ist, die Drehzahl (V) eines jeden der zwei Ventilatoren (21, 31) in Abhängigkeit von dem Verhältnis der Drehzahlen dieser zwei Ventilatoren (21, 31) zu regeln.

2. Steuervorrichtung nach Anspruch 1, wobei zur Reinigung der Luft in der Lokalität die Erhöhung des Mischungsanteils (P) an Frischluft zumindest in einem bestimmten Wertebereich der Regelung (Vmin, Pmax) in Bezug auf die Erhöhung der Drehzahl (V) der Ventilatoren priorisiert wird.

3. Steuervorrichtung nach Anspruch 1 oder Anspruch 2, wobei die Vorrichtung dazu ausgestaltet ist, die Luftzirkulation zu regeln, indem sie die Drehzahl (V) der Ventilatoren erhöht, wenn der geregelte Anteil (P) an Frischluft einen vorbestimmten Wert (Pmax) erreicht.

4. Steuervorrichtung nach einem der Ansprüche 1 bis 3, wobei die Vorrichtung dazu ausgestaltet ist, die Drehzahl der Ventilatoren auf einen vorbestimmten Wert (Vmin) zu senken, wenn der Anteil an Frischluft auf einen geringeren Wert als einen vorbestimmten Wert (Pmax) geregelt wird.

5. Steuervorrichtung nach einem der Ansprüche 1 bis 4, wobei die Steuervorrichtung auch dazu ausgestaltet ist, die Luftaufbereitung zu regeln, indem sie eine Abschätzung des Risikos von Kondensatbildung (114) in sensiblen Bereichen der Lokalität berücksichtigt.

6. Steuervorrichtung nach einem der Ansprüche 1 bis 5, wobei die Steuervorrichtung auch dazu ausgestaltet ist, die Luftaufbereitung zu regeln, indem sie einen Wert der Konzentration (113) an gebundenem Chlor in dem Wasser des Schwimmbeckens der Lokalität berücksichtigt, der verwendet wird, um die Konzentration an Chloraminen in der Luft in der Lokalität zu überwachen, oder gemäß einer direkten Messung von Chloraminen in der Luft in der Lokalität oder der zurückgeführten Luft.

7. Steuervorrichtung nach einem der Ansprüche 1 bis 6, wobei die Steuervorrichtung auch dazu ausgestaltet ist, die Luftaufbereitung zu regeln, indem sie eine Messung der Konzentration (115) an Kohlendioxid in der Luft in der Lokalität oder der abgezogenen Luft berücksichtigt.

8. Steuervorrichtung nach einem der Ansprüche 1 bis 7, umfassend Mittel zur Kommunikation durch Funkwellen (163), um Messwerte zu erhalten, die von in der Lokalität verteilten Sensoren stammen.

9. Steuervorrichtung nach einem der Ansprüche 1 bis 8, umfassend Mittel zur Kommunikation (164) über ein Kommunikationsnetz für seine Steuerung durch einen Bediener oder ein entferntes Steuersystem.

10. Steuervorrichtung nach Anspruch 1, wobei das Verhältnis in Abhängigkeit von einer Druckdifferenz festgelegt wird, die zwischen dem Äußeren und dem Inneren der Lokalität registriert wird.

11. Steuervorrichtung nach einem der Ansprüche 1 bis 10, die eine Nachrüstungsvorrichtung für einen bestehenden Servoautomaten (50) bildet und die Mittel zur Bildung einer Schnittstelle mit einem solchen bestehenden Automaten der Luftaufbereitungszentrale umfasst, um mit dem bestehenden Automaten Messwerte, die von dem bestehenden Automaten erhalten werden, und Befehle, die von der Nachrüstungsvorrichtung erzeugt werden, auszutauschen.

12. Nachrüstungsvorrichtung nach Anspruch 11, umfassend ferner zumindest einen Frequenzwandler (171, 172) zum Regeln des Ventilators.

13. Steuerverfahren (160) für eine Luftaufbereitungszentrale für eine Lokalität (10), die aus einem überdachten Schwimmbecken besteht und eine regelmäßige Reinigung der Luft benötigt, wobei die Zentrale einen Luftabzugsventilator (21) und einen Lufteinblasventilator (31) umfasst, um eine Zirkulation von aus der Lokalität abgezogener Luft zu erzeugen und Frischluft von außerhalb der Lokalität anzusaugen, und ein System (40) zur variablen Mischung von Frischluft und abgezogener Luft zum Einblasen von Luft in die Lokalität, wobei das Steuerverfahren einen Schritt zum Variieren der Mischungsanteile (P) an Frischluft und abgezogener Luft in Abhängigkeit von einer Überwachung (11, 12, 113, 114, 115, 162, 163) der Luft in der Lokalität umfasst, wobei das Steuerverfahren ferner einen Schritt zur Regelung der Drehzahl (V) der Ventilatoren in Abhängigkeit von einer Überwachung (11, 12, 113, 114, 115, 162, 163) der Luft in der Lokalität (10) umfasst, wobei das Verfahren **dadurch gekennzeichnet ist, dass** es ferner einen Schritt zur Regelung der Drehzahl (V) eines jeden der zwei Ventilatoren (21, 31) in Abhängigkeit von dem Verhältnis der Drehzahlen dieser zwei Ventilatoren (21, 31) umfasst.

## Claims

1. A control device (160) for an air handling unit for a room (10) constituted by an indoor swimming pool and requiring regular air purification, the unit comprising an air extraction fan (21) and an air blowing fan (31) for creating a circulation of air extracted from the room and taking fresh air from outside the room, and a system (40) for variable mixing between fresh air and extracted air for blowing air into the room, the control device being configured to vary the proportions (P) of the mixture of fresh air and extracted air as a function of a monitoring (11, 12, 113, 114, 115, 162, 163) of the air in the room, the control device being further configured to control the speed (V) of the fans as a function of a monitoring (11, 12, 113, 114, 115, 162, 163) of the air in the room (10), **characterized in that** the device is further configured to control the speeds (V) of each of the two fans (21, 31) as a function of the ratio between the speeds of these two fans (21, 31).

2. The control device as claimed in claim 1, wherein, in order to purify the air in the room, the increase in the proportion (P) of mixture in fresh air is favored, at least within a certain range of control values (Vmin, Pmax), over the increase in the speed (V) of said fans.

3. The control device as claimed in claim 1 or claim 2, wherein the device is configured to control the circulation of air by increasing the speed (V) of said fans when the proportion (P) of fresh air being controlled reaches a predetermined value (Pmax).

4. The control device as claimed in one of claims 1 to 3, wherein the device is configured to lower the speed of said fans to a predetermined value (Vmin), when the proportion of fresh air is controlled to a value below a predetermined value (Pmax).

5. The control device as claimed in one of claims 1 to 4, wherein the control device is also configured to control the air handling taking into account an estimation of a risk of condensation (114) at sensitive locations in the room.

6. The control device as claimed in one of claims 1 to 5, wherein the control device is also configured to control the air handling by taking into account a concentration value (113) of combined chlorine in the water of the swimming pool of the room, used to monitor the concentration of chloramines in the air of the room, or according to a direct measurement of chloramines in the room air or the return air.

7. The control device as claimed in one of claims 1 to 6, wherein the control device is also configured to control the air handling taking into account a concentration measurement (115) of carbon dioxide in the room air or the extracted air.

8. The control device as claimed in one of claims 1 to 7, comprising radio-wave communication means (163) for obtaining measured values from sensors distributed in the room.

9. The control device as claimed in one of claims 1 to 8, comprising communication means (164) by communication network, for its control by an operator or a remote control system.

10. The control device as claimed in claim 1, wherein said ratio is established as a function of a pressure difference recorded between the outside and inside of the room.

11. The control device as claimed in one of claims 1 to 10, which constitutes an upgrading device for a pre-existing servo-control automaton (50) and which comprises means for interfacing with such a pre-existing automaton of the air handling unit, for exchanging with said pre-existing automaton measurement values obtained by the pre-existing automaton and commands generated by the upgrading device.

12. The control device as claimed in claim 11, further comprising at least one frequency variator (171, 172) for controlling said fan.

13. A control method (160) for an air handling unit for a room (10) constituted by an indoor swimming pool and requiring regular air purification, the unit comprising an air extraction fan (21) and an air blowing fan (31) for creating a circulation of air extracted from the room and taking fresh air from outside the room, and a system (40) for variable mixing between fresh air and extracted air for blowing air into the room, the control method comprising a step of varying the proportions (P) of the mixture of fresh air and extracted air as a function of a monitoring (11, 12, 113, 114, 115, 162, 163) of the air in the room, the control method further comprising a step of controlling the speed (V) of the fans as a function of a monitoring (11, 12, 113, 114, 115, 162, 163) of the air in the room (10), the method being **characterized in that** it further comprises a step of controlling the speeds (V) of each of the two fans (21, 31) as a function of the ratio between the speeds of these two fans (21, 31).
